# EUROPEAN PATENT SPECIFICATION

(11) **EP 1 378 813 B1**
(45) Date of publication and mention of the grant of the patent: **13.02.2008**
(21) Application number: 03445083.3
(22) Date of filing: 30.06.2003
(51) Int. Cl.: G06F 1/00

(54) **Security policy enforcement systems**
System zur Durchsetzung einer Sicherheitspolitik
Systèmes permettant l'application d'une politique de sécurité

(30) Priority: 02.07.2002 SE 0202050
(43) Date of publication of application: 07.01.2004
(73) Proprietor: TeliaSonera AB, 106 63 Stockholm (SE)
(72) Inventor: Kvarnström, Hakan, 167 37 Bromma (SE); Hedbom, Hans, 65594 Karlstad (SE)
(74) Representative: Hopfgarten, Nils

(56) References cited:
- WO-A-01/17161
- US-B1- 6 202 157
- US-B1- 6 279 113
- SCHNEIER B: "Applied cryptography:ONE-WAY HASH FUNCTIONS" APPLIED CRYPTOGRAPHY : PROTOCOLS, ALGORITHMS, AND SOURCE CODE IN C, NEW YORK, NY : JOHN WILEY & SONS, US, 1996, pages 30-31, XP002961563 ISBN: 0-471-12845-7
- ALEC YASINSAC: "An Environment for security protocol intrusion detection"[Online] 2001, pages 1-23, XP002336254 Retrieved from the Internet: URL:http://citeseer.ist.psu.edu/yasinsac01 environment.html> [retrieved on 2005-07-11]

## Description

### TECHNICAL FIELD

This invention relates to Security Policy Enforcement Systems. Particularly, the invention relates to a security device, to a method for creating a Security Policy Enforcement System performing classification of input events in accordance with a predefined rule-base of detection policy elements, to a method for intrusion detection in a computer and information system having a Security Policy Enforcement System and to computer program products for implementing said methods.

### BACKGROUND OF THE INVENTION

The protection of computers and information systems is vital for the success of virtually every enterprise. Distributed system architectures connecting large number of computers raises question on how to better protect the information and resources of these systems. Traditionally, access-control services such as firewalls are used for controlling access to systems and services. However, the use of access-control components only, could present a single-point-of-failure. A flaw in an access-control component could lead to loss or theft of information or computer resources by allowing an intruder to circumvent existing security measures. Intrusion detection systems (IDS) is a technology that attempts to detect unauthorized activities and suspicious events (behaviour), that is, events that violate some defined security policy for a certain domain. Intrusion detection systems provide a second line of defence, allowing intrusions to be detected despite the failure of other security components. In addition, intrusion detection systems allow misuse or suspicious behaviour of inside users to be detected.

The security of the IDS itself is important for several reasons. Two of the most important reasons include: (1) The functionality of the IDS, i.e. its ability to operate as expected, depend greatly upon the IDS ability to resist attacks. If an intruder succeeds in mounting an attack against the IDS, its output is no longer reliable. (2) The confidentiality of the target systems and its information depend greatly upon the security of the IDS. The information contained within the IDS (e.g. the detection policy and collected audit data) may be misused by an intruder to gain knowledge about the target systems (e.g. weaknesses, protocols used, security policies etc.)

The scenario described in (1) and (2) are even more noticeable in distributed environments. An IDS is distributed when the different components of the detection system are distributed in some respect.

The IDS ability to protest its detection policy depend greatly upon the intrusion detection architectures (IDA). In a strictly centralized system, the detection policy is known only to a small part of the system. However, in a distributed intrusion detection architecture, the detection policy is known to a possible large number of entities. This imposes a threat to the IDS as the information is exposed to a greater extent.

The main reason for deploying intrusion detection systems is to improve the security of the target systems by adding a second layer of defence. However, security concerns have been raised and in some cases the deployment of IDS may introduce new security risks. These concerns involve the protection of information and information flow within the IDS and how this information can be used for illicit purposes. Two important security properties of an IDS are:

### 1) Confidentiality and integrity of audit data.

Audit data generated by the target systems within an IDS domain may contain sensitive information not to be disclosed outside the members of the domain. Such information may contain sensitive information about users and target systems as well as application related data containing classified information. In some cases, the mere existence of an event may be confidential as it reveals some form of activity. Nor should audit data be subject to insertion, deletion or alteration which seriously would affect the IDS capability to reliably detect intrusions and intrusion attempts.

### 2) Confidentiality and integrity of the detection policy.

The detection policy is defined by the set of rules that together states what events or occurrences are considered authorized versus unauthorized. Examples of detection policies for IDS are:
- Rules for access-control to targets (e.g. access control lists)
- Misuse signatures of audit data
- Statistical user- or system normal behaviour

Given the knowledge of the detection policy of a domain, it could be possible to deduce information about the target systems such as its purpose, level of protection etc. In addition, vulnerabilities of the target systems could be revealed by analyzing what attacks are detected by executing the policy. As for access-control policies in general (e.g. access-control lists in firewalls or routers), the detection policy is often tailored for a specific set of target systems and its vulnerabilities.

One-way functions are one of the fundamental building block of cryptography. Many security mechanisms providing security services such as authentication, integrity protection and confidentiality depend on the unique properties provided by one-way functions. Although one-way function are believed to exist, no precise mathematical definition have yet been presented. Informally, a one-way function is a function
*f*: S → T where S and T are any two sets, such that:
(1) for any *x* ∈ *S*, *f*(*x*) is "easy" to compute,
(2) given the information that f(*x*) = y, there is no "feasible" way of computing *x* for any reasonable large proportion of *y* belonging to *T,*
(3) for any *x*, *z* ∈ *S*, *f(x)* ≠ *f(z).* This property states that the function must be collision free, that is no two values of must result in the same belonging to

Assuming that the set is sufficiently large, an exhaustive search will be computationally infeasible and thereby impractical.

The UNIX password protection scheme is an example of a security mechanism making us of one-way functions. It provides confidentiality of the users passwords, thus preventing disclosure of the passwords even though the password file itself is disclosed. By calculating a one-way hash (using the DES-encryption scheme) of a users password, it is protected from disclosure but the resulting hash can still be used to verify that a users entered a correct password during the authentication process. This is achieved by calculating the one-way hash of the password provided during authentication and thereafter comparing the resulting hash with the stored hash for that particular user. If the two hashes are identical, the user must have entered the correct password and the authentication succeeded. Given the list of all one-way hashes for the users of the UNIX system, the only way of retrieving the clear text password is to perform an exhaustive search over the entire domain of clear text passwords. However, in practice, the search can often be limited to words and phrases known to be regularly chosen as passwords by human users (e.g. names, the make of cars, or other words easy to remember).

Several candidate one-way function have been proposed. Factoring and the discrete logarithm problem are two well-know "hard" mathematical problems that often are used to create one-way functions.

A security policy for a rule-based intrusion detection system can be viewed as a set of statements describing what events are authorized versus unauthorized. The security policy classifies incoming events (or sets of events) into predefined categories such as *legal events, intrusion attempts, intrusions* etc. Most rule-based IDS have taken a default accept standpoint due to the difficulty of defining all authorized events.

Detecting policy violation is a straightforward process of applying the same one-way function to all input events and compare the resulting values to the stored values of. If a match is found, the input event is an unauthorized event and an alarm is raised. Many intrusion detection systems utilizes simple string matching to find unauthorized patterns in the input data. For example, an IDS could search a UNIX syslog looking for strings containing the pattern "su root failed" which would indicate a failed attempt to gain administrative privileges on the system. By using one-way functions to hide the string patterns, it is hard to deduce the detection policy of the system, that is what strings the IDS is looking for during its analysis.

In order to protect fulstate policies, it is necessary to protect a mechanism that is able to answer the question of whether a certain sequence of actions is allowed or not. This mechanism needs to be flexible enough allowing variations in the sequence wanted to be accepted or rejected. A device working as a finite-state machine is a possible solution. In order to be useful in the context of secure policies they need to be protected from reverse engineering (i.e. to prevent disclosure of the detection policy).

The patent document US-B1-6,202,157 relates generally to computer network security systems and more particularly to computer network security systems and methods having enforceable policy provisions.

Accordingly, a computer network security system and method utilizes authenticated, and centrally assigned security policy data, such as password length limits and lifetime limits (e.g. for passwords and certificates), that is unilaterally enforced at network nodes by node policy enforcement engines. A computer stores variable policy data for use by a network node and securely provides the variable security policy rule data such as in the form of a policy certificate or data stream, for distribution to at least one network node to facilitate unilateral security policy enforcement at a network node level. Generally, the policy certificate and hence the variable policy rule data is used by a designated application or node and not forwarded with a signed message to a relying party, and need not be presented to a relying party since the variable policy data is used by designated applications or computer nodes and is not relied upon by any other application or node.

The document ALEC YASINSAC: "An Environment for security protocol intrusion detection" (Online) 2001, pages 1-23, XP-002336254, Retrieved from the Internet: URL:http://citeseer.ist.psu.edu/yasinsac01environment.html>
(retrieved on 2005-07-11), describes a method and architecture to detect intrusions in security protocol environments such as Public Key Infrastructures, The attack detection relies on recognition of characteristics of known attacks on cryptographic protocols as well as recognition intuitively dangerous activity. The attacks are characterized by sequences of activity traces. The pattern of protocol sequences produces a signature for the known attack. Protocol traces that match these signatures are always suspect, and in some cases may be sufficient evidence to affect a protective or damage control response in and of themselves, with no corroboration necessary.

A host based example of suspicious activity is that any program that sets UID during execution should be flagged as a high risk. Another example of activity that is always suspect is a high rate of password failures by a user.

### BRIEF DESCRIPTION OF THE INVENTION

Detection policies must be viewed as delicate and valuable assets in a system. The policies need to be protected from reverse engineering in order to be useful in the context of secure policies (i.e. to prevent disclosure of the detection policy). This invention address the problem of protecting the detection policy in a Security Policy Enforcement System (comprising IDS and firewall solutions) against disclosure to unauthorized persons. Given the knowledge of the detection policy, an intruder would potentially know what to do to penetrate the target systems and how to circumvent an IDS to avoid detection of his actions.

According to the invention, the detection policy is protected using an irreversible transform function, such as one-way functions or a public/secret encryption schemes, in order to make this task harder for intruders.

The invention protects a security policy by utilising irreversible transform functions, such as one-way functions or public/secret encryption schemes, to transform the states of a Security Policy Enforcement System finite-state machine. The Security Policy Enforcement System executes/ operates these transformed states and state transitions, which means that it is impossible to study its function by use of so called reverse engineering. The input data to the Security Policy Enforcement System will control the execution path of state transitions to an end-state/access-state. In the end-state, the Security Policy Enforcement System will generate a response if the detection policy have been violated or not.

In more detail, the invention relates to a security device comprising policy enforcement means, response generator means and a rule base module, characterised in that said rule base module comprises policy rules that are transformed into an irreversible protected representation that is used in this representation by the policy enforcement means for classifying/categorising the input events as authorised or unauthorised.

The invention also relates to a method for creating a Security Policy Enforcement System performing classification of input events in accordance with a predefined rule-base of detection policy elements defined as a finite-state machine comprising a state transitions diagram, characterised by following steps:
- transform each state transition in a state transitions diagram by means of at least one irreversible transform;
- store each transformed accept state.

Further, the invention relates to a method for intrusion detection in a computer and information system having a Security Policy Enforcement System, which comprises a detection policy that is stored in an irreversible transformed, protected representation as accept states (A(n)), characterised by the following steps:
- receive a new input event;
- transform said input event to an irreversible protected representation;
- determining the next current state (S) by applying the irreversible representation of the input event to a state transition function;
- compare (the next) current state (S) to the accept states (A(n)) and generate a response indicating an intrusion attempt, if the current state (S) is an accept state (A(n));
- terminate the execution of the intrusion detection method.

Furthermore, the invention relates to a computer program product directly loadable into the internal memory storage of a processing means, comprising the software code means for performing the steps of any claims 7-11 and a computer program product according to the invention may be stored on a computer usable medium, comprising readable program for causing a processing means in a control unit to control an execution of the steps of any of the claims 7-11.

Preferred embodiments are set forth in the depending claims.

An advantage of the invention is that the detection policy will become well-protected against reverse engineering.

### BRIEF DESCRIPTION OF THE DRAWINGS

The system according to the present invention will be described in more detail with reference to a drawing, in which
Figure 1 illustrates an embodiment of a network solution of the security policy enforcement system according to the invention;
Figure 2 illustrates another embodiment of a network solution of the security policy enforcement system according to the invention;
Figure 3 is a scheme illustrating a state diagram for a finite state machine;
Figure 4 is a simple state transition diagram;
Figure 5 shows a state transition diagram according to the invention;
Figure 6 is a block diagram illustrating an embodiment of a security device according to the invention.
Figure 7 is a flow-chart illustrating a method for detection of intrusion attempts according to the invention.

### DETAILED DESCRIPTION OF THE INVENTION

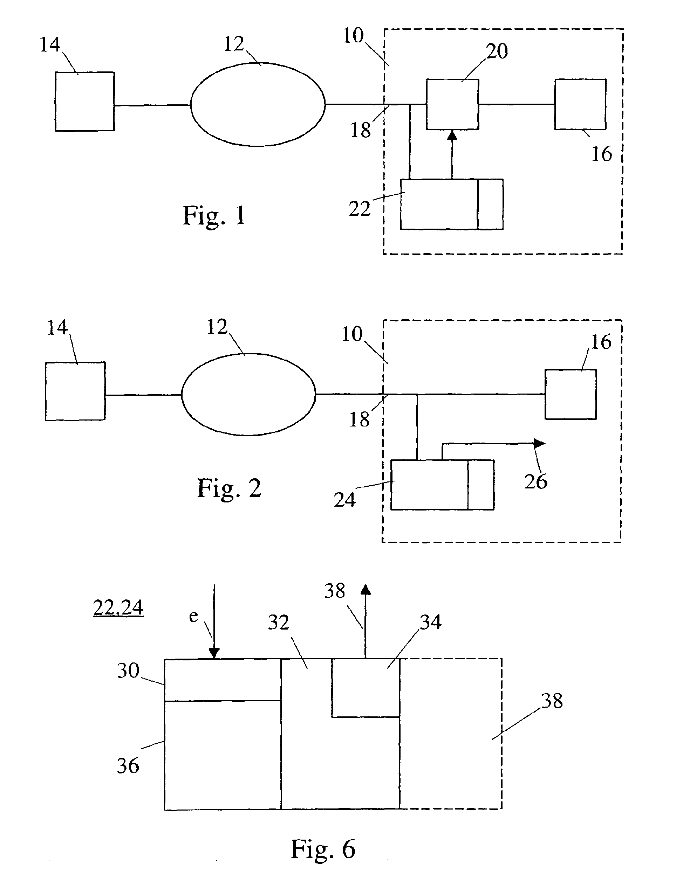

Fig. 1 and 2 illustrates two network solutions. In both figures, a computer and information system 10 is connected to a backbone network 12. Information is transmitted through this backbone network 12 in both directions between the system and different kind of hosts 14, like computer systems of different end-users, e.g. customers, partners, suppliers, hackers etc. Different communication standards, e.g. TCP/IP, may be used in the communication of information over the backbone network 12.

The computer and information system 10 may be designed in many different ways. The system comprises at least one end-user computer system 16, a so called host 16. Hosts range in size from personal computers to supercomputers. Said hosts may be arranged in one or a number of Local Area Networks. Each system must have at least one port or external connection 18 for exchanging (receiving and transmitting) information with the environmental networks. Each system needs some kind of protection against hackers and unauthorised traffic. Therefore, Security Policy enforcement systems comprising Intrusion detection systems and firewalls is used. Security problems arise because organisations not having mutual trust can be connected to each other. Before an organisation can choose mechanism to enforce security, it needs to establish a security policy. In figure 1, a firewall 20 mechanism is used to control access. A firewall is placed at each external connection 18 to guarantee that the computer and information system remain free from unauthorised traffic. A firewall consists of a set software barriers and a secure computer called a bastion hostone or more security domains. Each barrier uses a filter to restrict datagram network traffic. The bastion host could be used to offer externally-visible servers, and runs clients that access outside servers. Information and access-control policies determine how to configure the filter. Usually, a firewall blocks all trafficdatagrams arriving from external sources except those packetsdatagrams destined for the bastion host. A security device 22 comprising the firewall mechanism monitors each external connection 18. The monitoring can be active or passive. In active monitoring, the firewall mechanism sends a notofication that notifies a manager whenever an incident occurs. In passive monitoring, a firewall logs a record of each incident in a file or disc. A passive monitor usually records information about normal traffic, e.g. simple statistics, as well as datagrams that are filtered. A manager can access the log at any time. A computer program can be used for analysing the logs.

In fig. 2, an off-line design is illustrated. The security device 24 listens to the the second connection. When an unauthorised event or attack is registered, the security device 24 generates an alarm 26. Said alarm, or alert, may be connected to the computer and information system, or to a monitoring centre, or registred in a logg for further analysis later

Both security devices of figure 1 and 2 (e.g. device 20 and 24) can collect, analyse and respond to log data originated from both network traffic and system/application audit logs.Distributed system architectures connecting large number of computers and ports raises question on how to better protect the Information and resources of these systems. Traditionally, access-control services such as firewalls are used to control access to systems and services. However, the use of access-control components only, could present a single-point-of-failure. A flaw in an access-control component could lead to loss or theft of information or computer resources by allowing an intruder to circumvent existing security measures. Intrusion detection systems (IDS) is a technology that attempts to detect unauthorized activities and suspicious events (behavior), that is, events that violate some defined security policy for a certain domain. Intrusion detection systems provides a second line of defence, allowing intrusions to be detected despite the failure of other security components. In addition, intrusion detection systems allow misuse or suspicious behavior of inside users to be detected.

A security policy for a rule-based intrusion detection system can be viewed as a set of statements describing what events are authorized versus unauthorized. Informally, the security policy classifies incoming event (or sets of events) into predefined categories such as *legal events, intrusion attempts, intrusions* etc. In its simplest form a security policy states what patterns or signatures of events that are authorized/unauthorized. A *default accept* policy would search for events having a certain signature and classify those as unauthorized whereas a *default deny* policy makes the assumption that all events are unauthorized except those that explicitly matches a defined signature.

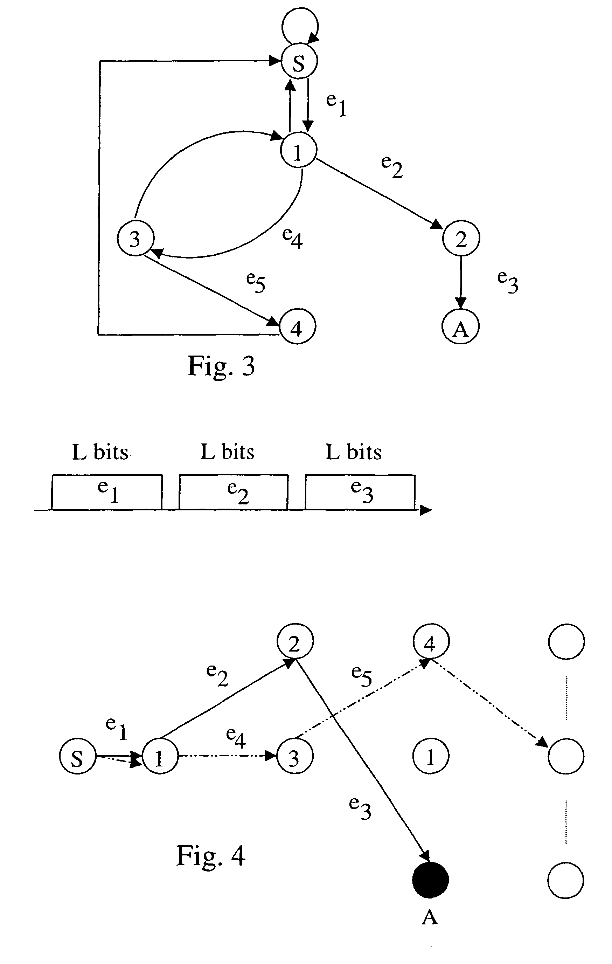

Figure 3 illustrates a state diagram for a finite state machine, with circles representing states and arrows representing transitions between them. The label on each transition shows what the finite state machine receives to cause the transition. There is a start state S of the finite state-machine. When receiving the first event e₁, the machine changes from state S to state 1. Other events will not cause any change of state. From state 1 ,two different paths are possible depending on which of the events, e₂ or e₄, is received. If e₂ is received, the state machine would change from state 2. But if event e₄ is received, the machine will change state to 3. Standing in state 2 and receiving the event e₃, the machine will arrive at a final state, a so called accept state A. The policy rules may define this as a not allowed state and the event sequence of events e₁ to e₃ as an intrusion attempt. If the finite-state machine is a model of an IDS security device, a hacker can learn the policy rules by reverse engineering. An alarm will be sent for each event that is not allowed. Even if the policy rules are encrypted, they could be decrypted.

In figure 4, a state transition diagram is illustrated. This state transition diagram corresponds to the finite-state machine illustrated in figure 3. Hackers will have small problem to disclose such a small state: transition diagram, even if it is encrypted.

The idea of the following invention is to encrypt both the final states and one ore more events leading to them. In the following, a protection scheme for a finite-state machine that in effect hides one or more valid finite-state machines within a large set of in-valid finite-state machines is described.

Normally, a finite-state machine used for matching either stops in error or is transferred into an error state (or fall-back state) as soon as na unexpected event is encountered in a state. When error states are used there are, usually, some events that will work as reset events that will bring the machine back on its tracks by ignoring intermediate events until it is once again possible to make some sense out of the input sequence of events. Frequent examples of these types of finite-state machines can be found in network protocols and in compilers. According to the invention there is a valid transition in the protected machine for every combination of events and states. This means in effect that any traversal of the protected finite-state machine will either go on forever or stop when an accepting state is reached. The idea of a never ending traversal is theoretically a very nice solution but unfortunately practically impossible according to the invented traversal method. Therefore, any traversal that has not reached an accepting state or some other predetermined state within a freely selectable time is terminated. These pre-determined states are called synchronization states (ST) and the time limit will be counted in number of states traversed.

Formally a deterministic finite-state machine M can be described as a five-tuple M= (Σ, Q, q₀, δ, A). In this cases Σ = {x₀, x₁ ..., xₙ} is the alphabet of the machine or the set of possible input events to the machine, Q = { q₀, q₁ ..., qₘ } is the set of states, q₀ ∈ Q is the start state, :δ: Q×Σ → Q is the transition function and A ⊆ Q is the set of filial states (or accept states).

δ is the transition function that can be realized as a |Q| × |Σ| matrix, called state transition diagram.

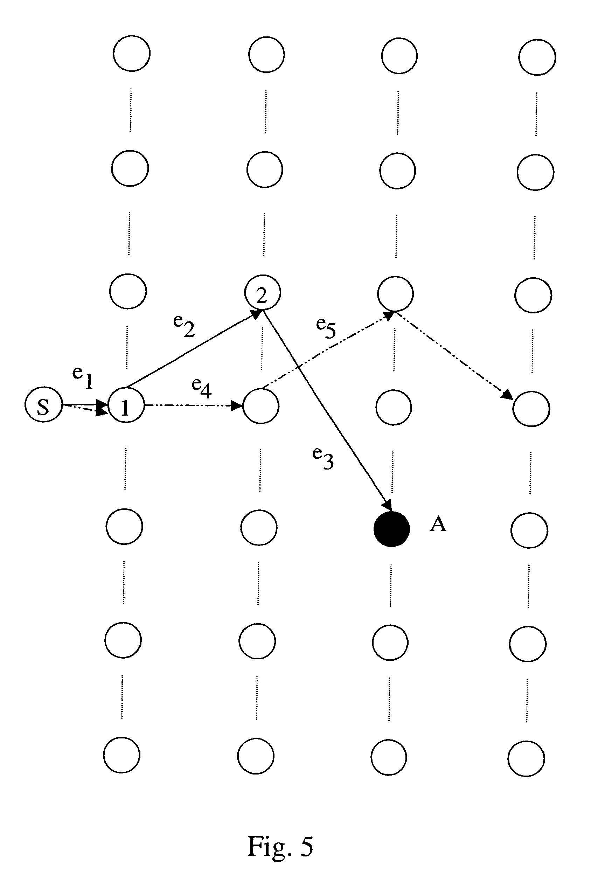

In figure 5, a state transition diagram according to the invention is illustrated. In this diagram every state in Q is associated with a column and every event in Σ is associated with a row. The intersection between a row and a column holds the value of the new state to transfer to should this event happen in this state. The size of the matrix depends on the chosen length of the input data segment. If the length of a segment is L bits, the number of possible events and transitions is 2^{2L}. The number of columns indicate the cycle-length of the state-machine. The first column contains all possible states for the first traversal. The second column, contains all possible state of the second traversal and so on. In general, only a single state value of each column is valid and will lead execution to an termination.

The number of rows in figure 5 (i.e. the number of possible state values for each transition) depend on actual configurations of the device (e.g. the size of the input data (events), the number of output bits from the irreversible transformation).

Execution of the state machine continues, column by column until an accept state has been reached or until a predefined number transitions have been performed. Periodic synchronization states (ST) can be added to the coulumns to indicate that the machine is still alive and execution should continue. If no synchronization state has been reached within a predefined number of traversals, execution is terminated. ST are also used to detect loops during execution (i.e. when a certain state is visited several times during execution of the machine).

The invention also relates to a method for creating an Intrusion Detection System performing classification of input events in accordance with a predefined rule-base defined as a finite-state machine comprising a state transitions diagram, characterised by following steps:
- transform each state transition in a state transitions diagram by means of at least one irreversible transform;
- store each transformed accept state.

The policy rules, even called policy state elements, is transformed into transformed accept states and may preferably be stored in a list, a accept state list, in the rule base module.

At least one public/secret encryption scheme or cryptographic one- way function is used as the irreversible transform in the step wherein each state transition in a state transitions diagram is transformed. The following simple example show how signatures can be used to detect policy violations. Consider a set of input events x₁, x₂ ... , xₙ, ∈ X all which are *k*-bit binary strings. u₁, u₂, ..., Uₘ ∈ U is the set of "signature strings" that identifies an unauthorized event. Whenever x_{i,i≤n} = u_{j,j} ≤ ₘ the event being analyzed matches a detection signature and an alarm is raised. The detection scheme is fairly simple as it only involves comparing events over X with all strings in U searching for identical pairs. Now consider the set u₁', u₂' .. uₘ' = f(u1), f(u2) ..., f(uₘ) ∈ U' where f is any cryptographically strong one-way function. For each signature, a hash is calculated and stored. Due to the inherent properties of the one-way function, it is hard to deduce any u ∈ U given f(u) ∈ U. Thus, U' can be made publicly available without compromising the secrecy of U. The computational effort to successfully deduce U is on average equal to an exhaustive search of ½ of the domain of U. Thus, assuming u₁, u₂,..., uₘ ∈ U where |*U*| has a binary length of k-bits. The computational effort to find u ∈ U given f(u) ∈ U would (in average) require 2^{k-1} operations. Therefore, k should be chosen to be a high value.

Detecting policy violation is a straightforward process of applying the same one-way function to all input events uᵢ ∈ U during traversal and compare the resulting values to the stored values of U'. If a match is found, the sequence of input event leading to the current state is an unauthorized event and an alarm is raised. By using one-way functions to hide the string patterns, it is hard to deduce the detection policy of the system, or in other words, what strings the IDS is looking for during its analysis.

In fig. 6, a security device 22, 24 comprising an event transforming means 30, policy enforcement means 32, response generator means 34 and a rule base module 36 is shown. Said rule base module comprises policy rules that has been transformed into an irreversible representation. The policy enforcement means 32 uses this representation for classifying/categorising the input events as authorised or unauthorised.

Said rules are transformed by at least one irreversible transform. In one preferred embodiment said irreversible transform is a cryptographic one-way function. In another embodiment a public/secret encryption scheme is used as an irreversible transform.

The transformed rules are listed in an accept-state list and stored in the rule base module 36. The accept-state list and the policy elements of the accept-state list will be described in more detail further down.

The operation of the security device will now be described in more details with reference to figure 6. Incoming events, e, on the external connection are copied and supplied to the security device 22,24. Each event comprises input data and is transformed by a transforming means 30 to an irreversible protected representation E. Said transformed event is compared with the transformed policy elements of the accept-state list, stored in the rule base module 36, by the policy enforcement means 32. If the event equals an accept-state in the accept-state list, the response generator means 34 will generate a response 38, e.g. an alarm response, which is delivered to a pre-defined response receiver for further action to be performed.

The security device 22,24 comprises a computer program processing means 38 executing input data sequences, said data sequences controlling state transitions possibly leading to an accept state. The computer program product means is adapted to detect a rule violation in a sequence of input data for each accept-state.

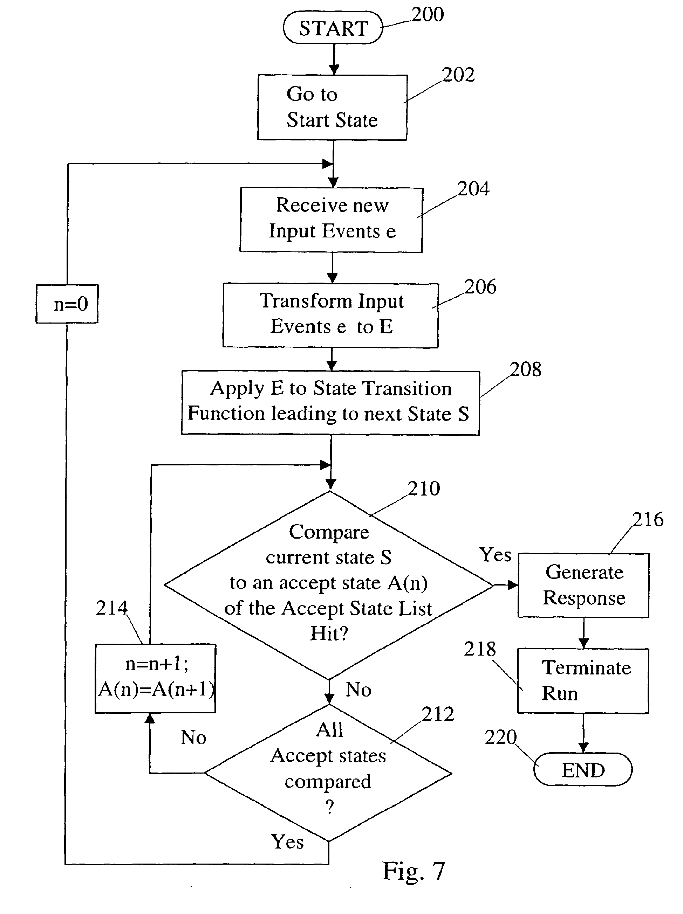

Now the invented method for detection purposes will be described with reference to fig. 7.

The execution of the intrusion detection method begins at start 200 and continues with step 202, go to a pre-defined start state Start . The first iteration of the method's main-iteration starts from the Start state and a first input event e is received in step 204. In the next step, step 206, the input event e is transformed by use of an irreversible transform function to a protected representation E. This protected representation E is applied to a state transition function determining a new current state S in step 208.

In the next step, step 210, a new sub-iteration is started. Said sub-iteration comprises steps 210, 212 and 214. The new current state S is compared to a state A(n) of the set of accept states, above referred to as a list of accept states. If an accept state is not equivalent to S in step 210 and all accept states are not checked in step 212, next accept state A(n+1) is read from the list of accept states in step 214. This sub-iteration will continue until the whole set of accept states is checked for equivalents or an equivalent accept state is identified. If no equivalent accept states is found and all accept states are checked, the sub-iteration will stop in step 212 and the main-iteration will continue with a new input events e in step 204 as described above.

However, if a current state S equals an accept state A(n), than a hit is identified and the yes-condition of step 210 is satisfied and, in step 216, a response alert is provided, because an intrusion is detected. Both the main-iteration and the sub-iteration will be terminated in step 218. The method is stopped in end-step 220.

An implementation of the invented method in an intrusion detection system will now be described. The security device starts in a pre-defined start state. In the next step, step 204, the security device receives an input event e in an interpretable representation. The security device therefore comprises a means for receiving a new input event providing the collecting function of the device. Next step, transforming the input event to an irreversible representation is performed automatically by a means for transforming said input event to an irreversible representation of the event. Thereafter, said irreversible representation of the input event is applied to a means for determining the next current state S. The next current state S is determined/calculated by use of a state transition function. The next current state is now the current state S of the finite-state machine implementing the security device of the IDS. The current state S is compared to the different accept states A(n) of the accept state list, which is the store, irreversible transformed, protected representation of the detection policy in the security device, which comprises means For comparing the current state S to accept states A(n). By means of the transformed detection policy, the decision function of the security device is capable to decide if a violation of the detection policy has occurred or not. If a current state S is similar to an accept state A(n) of the accept state list, a response is generated indicating an intrusion attempt. Said response is generated by means for generating a response, which performs the response function by means of a response policy. As soon as an accept state is present in a sequence of input events or a sequence of input events is leading to an accept state and a response is generated, the run or execution is terminated. However, the execution may be terminated when the number of events of an input sequence equals a predefined maximum-number of events for an input sequence.

Hence, the security device for intrusion detection may comprise following means:
- means for receiving a new input event;
- transforming means 30: means for transforming input events from an interpretable representation to an irreversible protected representation;
- policy enforcement means 32 comprising means for determining the next current state S by applying the irreversible representation of the input event to a state transition function, and means for comparing the (next) current state S to the accept states A(n);
- response generator means 34 comprising means for generating a response indicating an intrusion attempt, if the current state S is an accept state A(n), and means for terminating the execution of the intrusion detection method;
- rule base module 36 comprising the accept state list.

Further, the security device may comprise means for terminating the execution when the number of events of an input sequence equals a predefined maximum-number of events for an input sequence.

Said means of the security device mentioned above may be implemented as parts or elements in a computer program.

The methods may be implemented by means of computer program products comprising the software code means for performing the steps of the methods. Each computer program product is run on processing means 38 (see figure 6) within the security policy enforcement means, or in a separate means connected to the security policy enforcement means. The computer programs are loaded directly or from a computer usable medium, such as a floppy disc, a CD, the Internet etc.

Therefore, the invention also relates to a computer program product directly loadable into the internal memory storage of a processing means within the control unit, comprising the software code means for performing the steps of any claims 7-11.

The computer program product according to the invention may be stored on a computer usable medium, comprising readable program for causing a processing means in a control unit to control an execution of the steps of any of the claims 7-11.

## Claims

1. A security device (22;24) operable to detect intrusion in a computer and information system (10), which security device (22;24) comprises a means operable to receive a new input event, e, a transforming means (30) operable to transform said input events, e, from an interpretable representation to an irreversible protected representation, E, a policy enforcement means (32) comprising means operable to determine the next current state S by applying the irreversible representation of the input event, E, to a state transition function, and a means operable to compare the (next) current state S to accept - states A(n) of an accept- state list stored in a rule base module (36), a response generator means (34) operable to generate a response indicating an intrusion attempt, if the current state S is an accept state A(n), and a means operable to terminate the execution when the number of events of an input sequence equals a predefined maximum number of events for an input sequence.

2. A security device (22,24) according to claim 1, **characterised in that** said input events, e, are transformed by at least one irreversible transformation.

3. A security device (22,24) according to claim 2, **characterised in that** said irreversible transform is a cryptographic one-way function.

4. A security device (22,24) according to claim 2, **characterised in that** said irreversible transform is a public/secret encryption scheme.

5. A security device (22,24) according to claim 1, **characterised in that** said device comprises a computer program processing means (38) executing input data sequences, said data sequences controlling state transitions possibly leading to an accept state.

6. A security device (22,24) according to claim 5, **characterised in that** a computer program product means is adapted to detect a rule violation in a sequence of input data for each accept state.

7. Method for intrusion detection in a computer and information system (10) having a Security Policy Enforcement System, which comprises a detection policy that is stored as accept states (A(n)) in an irreversible transformed, protected representation, **characterised by** the following steps:
- receive a new input event (step 204);
- transform said input event to an irreversible protected representation (step 206);
- determining the next current state (S) by applying the irreversible representation of the input event to a state transition function (step 208);
- compare (the next) current state (S) to the accept states (A(n)) (step 210) and generate a response indicating an intrusion attempt (step 216), if the current state (S) is an accept state (A(n));
- terminate the execution of the intrusion detection method (step 218).

8. A method according to claim 7, **characterised in that**, at least one cryptographic one-way function is used as the irreversible transform in the step wherein each state transition in a state transitions diagram is transformed.

9. A method according to claim 7, **characterised in that**, at least one public/secret encryption scheme is used as the irreversible transform in the step wherein each state transition in a state transitions diagram is transformed.

10. Method according to any one of Claims 7-9, **characterised by** the following step:
- terminate the execution when the number of events of an input sequence equals a predefined maximum-number of events for an input sequence.

11. A computer program product directly loadable into the internal memory storage of a processing means, comprising the software code means for performing the steps of any of the claims 7-10.

12. A computer program product according to the invention may be stored on a computer usable medium, comprising readable program for causing a processing means in a control unit to control an execution of the steps of any of the claims 7-10,

## Patentansprüche

1. Sicherheitseinrichtung (22;24), die betreibbar ist, um Eindringen in einen Computer und ein Informationssystem (10) festzustellen, welche Sicherheitseinrichtung (22;24) Mittel, die betreibbar sind, ein neues Eingabeereignis, e, zu empfangen, Umwandlungsmittel (30), die betreibbar sind, die Eingangsereignisse, e, von einer interpretierbaren Darstellung in eine unumkehrbar geschützte Darstellung, E, umzuwandeln, Politikerzwingungsmittel (32), die Mittel aufweisen, die betreibbar sind, den nächsten laufenden Zustand S zu bestimmen, indem die unumkehrbare Darstellung des Eingabeereignisses, E, an eine Zustandsübergangsfunktion angelegt wird, und Mittel, die betreibbar sind, den (nächsten) laufenden Zustand S mit Annahmezuständen A(n) einer Annahmezustandsliste zu vergleichen, die in einem Regelbasismodul (36) gespeichert sind, Antwortgeneratormittel (34), die betreibbar sind, eine Antwort zu erzeugen, die einen Eindringungsversuch anzeigt, wenn der laufende Zustand S ein Annahmezustand A(n) ist, und Mittel aufweist, die betreibbar sind, die Ausführung zu beenden, wenn die Anzahl von Ereignissen einer Eingangssequenz gleich einer vorbestimmten maximalen Anzahl von Ereignissen für eine Eingabesequenz ist.

2. Sicherheitseinrichtung (22,24) nach Anspruch 1, **dadurch gekennzeichnet, dass** das Eingabeereignisse, e, durch wenigstens eine unumkehrbare Umwandlung umgewandelt werden.

3. Sicherheitseinrichtung (22,24) nach Anspruch 2, **dadurch gekennzeichnet, dass** die unumkehrbare Umwandlung eine kryptographische Einwegfunktion ist.

4. Sicherheitseinrichtung (22,24) nach Anspruch 2, **dadurch gekennzeichnet, dass** die unumkehrbare Umwandlung ein öffentliches/geheimes Verschlüsselungsschema ist.

5. Sicherheitseinrichtung (22,24) nach Anspruch 1, **dadurch gekennzeichnet, dass** die Einrichtung Computerprogrammverarbeitungsmittel (38) aufweist, die Eingangsdatensequenzen ausführen, welche Datensequenzen Zustandsübergänge kontrollieren, die möglicherweise zu einem Annahmezustand führen.

6. Sicherheitseinrichtung (22,24) nach Anspruch 5, **dadurch gekennzeichnet, dass** Computerprogrammproduktmittel dazu ausgebildet sind, eine Regelverletzung in einer Sequenz von Eingangsdaten für jeden Annahmezustand zu delektieren.

7. Verfahren zur Feststellung von Eindringen in einen Computer und ein Informationssystem (10), das ein Sicherheitspolitikdurchsetzungssystem hat, welches eine Detektionspolitik aufweist, die als Annahmezustände (A(n)) in einer unumkehrbar umgewandelten geschützten Darstellung gespeichert sind, **gekennzeichnet durch** die folgenden Schritte:
- empfange ein neues Eingangsereignis (Schritt 204);
- wandle das Eingangsereignis in eine unumkehrbar geschützte Darstellung um (Schritt 206);
- Bestimmen des nächsten laufenden Zustandes (S) durch Anlegen der unumkehrbaren Darstellung des Eingabeergebnisses an eine Zustandsübergangsfunktion (Schritt 208);
- vergleiche den (nächsten) laufenden Zustand (S) mit den Annahmezuständen (A(n)) (Schritt 210) und erzeuge eine Antwort, die einen Eindringungsversuch (Schritt 216) anzeigt, wenn der gegenwärtige Zustand (S) ein Annahmezustand (A(n)) ist ;
- beende die Ausführung des Eindringungsdetektionsverfahrens (Schritt 218).

8. Verfahren nach Anspruch 7, **dadurch gekennzeichnet, dass** wenigstens eine kryptographische Einwegfunktion als die unumkehrbare Umwandlung in dem Schritt benutzt wird, indem jeder Zustandsübergang in einem Zustandsübergangsdiagramm umgewandelt wird.

9. Verfahren nach Anspruch 7, **dadurch gekennzeichnet, dass** wenigstens ein öffentliches/geheimes Verschlüsselungsschema als die irreversible Umwandlungin dem Schritt verwendet wird, in dem jeder Zustandsübergang in einem Zustandsübergangsdiagramm umgewandelt wird.

10. Verfahren nach einem der Ansprüche 7-9, **gekennzeichnet durch** den folgenden Schritt:
- beende die Ausführung, wenn die Anzahl von Ereignissen einer Eingabesequenz gleich einer vorbestimmten Maximalanzahl von Ereignissen für eine Eingabesequenz ist.

11. Computerprogrammerzeugnis, das direkt in die interne Speicherspeicherung von Verarbeitungsmitteln ladbar ist, das die Softwarecodemittel zum Durchführen der Schritte einer der Ansprüche 7-10 aufweist.

12. Ein Computerprogrammerzeugnis gemäß der Erfindung kann auf einem computerbenutzbaren Medium gespeichert werden, das ein lesbares Programm aufweist, um zu bewirken, dass Verarbeitungsmittel in einer Steuereinheit die Ausführung der Schritte einer der Ansprüche 7-10 kontrolliert.

## Revendications

1. Dispositif de sécurité (22 ; 24) utilisable pour détecter une intrusion dans un système informatique et d'informations (10), lequel dispositif de sécurité (22 ; 24) comprend un moyen utilisable pour recevoir un nouvel événement d'entrée, e, un moyen de transformation (30) utilisable pour transformer lesdits événements d'entrée, e, en passant d'une représentation interprétable à une représentation protégée irréversible, E, un moyen d'application d'une politique (32) comprenant un moyen utilisable pour déterminer l'état actuel S suivant en appliquant la représentation irréversible de l'évènement d'entrée, E, à une fonction de transition d'état, et un moyen utilisable pour comparer l'état actuel S (suivant) à la liste d'états « états A(n) d'une acceptation » d'acceptation stockée dans un module de base de règles (36), un moyen de générateur de réponse (34) utilisable pour générer une réponse indiquant une tentative d'intrusion, si l'état actuel S est un état d'acceptation A(n), et un moyen utilisable pour terminer l'exécution lorsque le nombre d'évènements d'une séquence d'entrée est égal à un nombre d'événements maximum prédéfini pour une séquence d'entrée.

2. Dispositif de sécurité (22, 24) selon la revendication 1, **caractérisé en ce que** lesdits événements d'entrée, e, sont transformés par au moins une transformation irréversible.

3. Dispositif de sécurité (22., 24) selon la revendication 2, **caractérisé en ce que** ladite transformation irréversible est une fonction cryptographique unidirectionnelle.

4. Dispositif de sécurité (22, 24) selon la revendication 2, **caractérisé en ce que** ladite transformation irréversible est un système de chiffrement public/privé,

5. Dispositif de sécurité (22, 24) selon la revendication 1, **caractérisé en ce que** ledit dispositif comprend un moyen de traitement de programme informatique (38) exécutant des séquences de données d'entrée, lesdites séquences de données commandant des transitions d'état entraînant éventuellement un état ci' acceptation.

6. Dispositif de sécurité (22, 24) selon la revendication 5, **caractérisé en ce qu'** un moyen de produit de programme informatique est adapté pour détecter une violation de règle dans une séquence de données d'entrée pour chaque état d'acceptation.

7. Procédé de détection d' intrusion dans un système informatique et d'informations (10) comportant un système d'application d'une politique de sécurité, qui comprend une politique de détection qui est stockée en tant qu'états d' acceptation (A (n) ) dans une représentation transformée et protégée irréversible, **caractérisé par** les étapes suivantes :
- recevoir un nouvel événement d'entrée (étape 204) ;
- transformer ledit événement d'entrée en une représentation protégée irréversible (étape 206) ;
- déterminer fêtât actuel (8) suivant en appliquant la représentation irréversible de l'événement d'entrée a une fonction de transition d'état (étape 208) :
- comparer l'état actuel (S) (suivant) aux états d'acceptation (A(n)) (étape 210) et générer une réponse indiquant une tentative d'intrusion (étape 216), si l'état actuel (S) est un état d'acceptation A(n) ;
- terminer l'exécution du procédé de détection d'intrusion (étape. 218).

8. Procédé selon la revendication 7, **caractérisé en ce que** au moins une fonction cryptographique unidirectionnelle est utilisée comme transformation irréversible dans l'étape dans laquelle chaque transition d'état dans un diagramme de transitions d'état est transformée.

9. Procédé selon la revendication 7, **caractérisé en ce que** au moins un système de chiffrement public/privé est utilisé comme transformation irréversible dans l'étape dans laquelle chaque transition d'état dans un diagramme de transitions d'état est transformée,

10. Procédé selon l'une quelconque des revendications 7 à 9, **caractérisé par** l'étape suivante :
- terminer l'exécution lorsque le nombre d'évènements d'une séquence d'entrée est égal à un nombre d'événements maximum prédéfini pour une séquence d'entrée.

11. Produit de programme informatique pouvant être directement chargé dans la mémoire interne d'un moyen de traitement, comprenant le moyen de code de logiciel pour effectuer les étapes de l'une quelconque des revendications 7 à 10,

12. Produit de programme informatique selon l'invention peuvent être stocké sur un support utilisable par un ordinateur, comprenant un programme lisible pour qu'un moyen de traitement dans une unité de commande commande une exécution des étapes de l'une quelconque des revendications 7 à 10.
